# EUROPEAN PATENT APPLICATION

(11) **EP 2 398 298 A2**
(43) Date of publication of application: **21.12.2011**
(21) Application number: 11167366.1
(22) Date of filing: 24.05.2011
(51) Int. Cl.: H05B 33/08

(54) **Power supply for an airfield LED sign**

(30) Priority: 24.05.2010 US 347594 P
(71) Applicant: ADB Airfield Solutions LLC, Columbus, OH 43230 (US)
(72) Inventor: Kustra, James, Dublin, OH 43016 (US)
(74) Representative: pronovem

(57) **Abstract**

There is disclosed a power supply that comprises a rectifier (24) for receiving an alternating current, a boost circuit (26) coupled to the rectifier and receiving the rectified alternating current, and a processor (12) coupled to the boost circuit. The processor is operable to control the operation of the boost circuit. The processor is operable to control the boost circuit to provide a constant, regulated current to a load (13) by controlling the voltage at the output of the boost circuit. The constant, regulated current provided to the load is independent of the magnitude of the alternating current

## Description

### TECHNICAL FIELD

The present disclosure relates generally to power supplies.

### BACKGROUND

Airfield lighting systems historically employ constant current sources connected to series connected incandescent bulbs to provide uniform brightness from all lamps in the series circuit even with voltage drops in the cable connecting these lamps. The current source in these systems is made to be adjustable in steps defined by the FAA to control the intensity of the lamps determined by weather conditions and/or time of day. However, some components in these airfield lighting circuits, such as signs, require a constant brightness even when powered from the same stepped current circuit that powers the lamps.

### SUMMARY

According to an aspect of the invention, there is provided an apparatus, comprising a rectifier configured for receiving an alternating current having a magnitude, a boost circuit coupled to the rectifier for receiving the rectified alternating current, and a processor coupled to the boost circuit. The processor is operable to control the operation of the boost circuit. In particular, the processor is operable to control the boost circuit to provide a predefined constant, regulated current by controlling a voltage at the output of the boost circuit. The predefined constant, regulated current is independent of the magnitude of the alternating current.

The boost circuit is preferably configured to be coupled to a load for providing said predefined constant regulated current.

Preferred embodiments are set out in the dependent claims.

According to an aspect of the invention, there is provided an airfield lighting device. The airfield lighting device advantageously comprises the above described apparatus, which is coupled to a plurality of light emitting diodes, which act as load to said apparatus. In particular, the airfield lighting device comprises a rectifier for receiving an alternating current; a boost circuit coupled to the rectifier and receiving the rectified alternating current; a processor coupled to the boost circuit, the processor operable to control the operation of the boost circuit, and a plurality of light emitting diodes coupled to the boost circuit. The processor is operable to control the boost circuit to achieve a predefined constant, regulated current to the plurality of light emitting diodes by controlling the voltage at the output of the boost circuit. The predefined constant, regulated current is independent of the magnitude of the alternating current.

Preferably, the airfield lighting device further comprises a voltage sensor coupled to the boost circuit operable to provide data representative of a voltage at the boost circuit to the processor;

Preferably, the airfield lighting device further comprises a controllable switching device coupled interstitial to the boost circuit and the plurality of light emitting diodes, the controllable switching device being operable to provide an open circuit indication to the processor.

Preferably, the airfield lighting device comprises a current sensor coupled interstitial to the boost circuit and the plurality of light emitting diodes, the current sensor providing data representative of a current passing through the plurality of light emitting diodes to the processor.

### BRIEF DESCRIPTION OF THE DRAWINGS

The accompanying drawings incorporated herein and forming a part of the specification illustrate the examples embodiments.

FIG. 1 is a block diagram illustrating an example of a power supply that receives an AC current and provides a DC output.

FIG. 2 is a block a block diagram illustrating an example of a power supply that receives an AC current and provides a DC output and provides an open circuit indication.

FIG. 3 is a circuit diagram illustrating an example of a power supply that receives an AC current and provides a DC output and provides an open circuit indication.

FIG. 4 illustrates an example of a schematic diagram for a lighting system in accordance with an example embodiment.

### OVERVIEW OF EXAMPLE EMBODIMENTS

The following presents a simplified overview of the example embodiments in order to provide a basic understanding of some aspects of the example embodiments. This overview is not an extensive overview of the example embodiments. It is intended to neither identify key or critical elements of the example embodiments nor delineate the scope of the appended claims. Its sole purpose is to present some concepts of the example embodiments in a simplified form as a prelude to the more detailed description that is presented later.

Described in an example embodiment herein is a circuit that takes an adjustable constant current source to provide a regulated constant current to a load by controlling the voltage applied to the load. The circuit can receive an AC current and output a DC voltage to a load. The circuit can comprise a feedback circuit that provides an indication of a current flowing through a load, enabling a controller to adjust the DC output voltage in order to achieve a constant current through the load.

### DESCRIPTION OF EXAMPLE EMBODIMENTS

This description provides examples not intended to limit the scope of the appended claims. The figures generally indicate the features of the examples, where it is understood and appreciated that like reference numerals are used to refer to like elements. Reference in the specification to "one embodiment" or "an embodiment" or "an example embodiment" means that a particular feature, structure, or characteristic described is included in at least one embodiment described herein and does not imply that the feature, structure, or characteristic is present in all embodiments described herein.

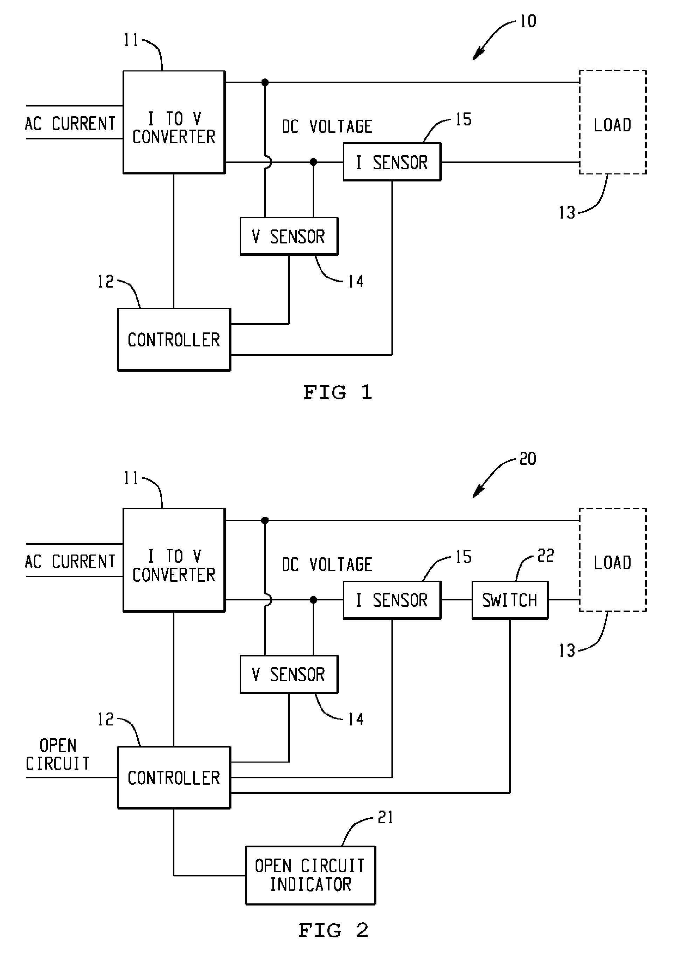

FIG. 1 is a block diagram illustrating an example of a power supply 10 that receives an AC current and provides a (direct current) DC output. In this example an AC current is received by a current to voltage (I to V) converter circuit 11. I to V converter circuit 11 is suitably any circuit that may convert an AC current to a DC voltage, such as a bridge circuit combined with a boost regulator. Controller 12 controls the operation of I to V converter 11 in order to achieve a desired load current. The output (voltage) of I to V converter circuit 11 is provided to load 13.

Controller 12 suitably comprises logic for performing the functionality described herein. "Logic", as used herein, includes but is not limited to hardware, firmware, software and/or combinations of each to perform a function(s) or an action(s), and/or to cause a function or action from another component. For example, based on a desired application or need, logic may include a software controlled microprocessor, discrete logic such as an application specific integrated circuit ("ASIC"), system on a chip ("SoC"), programmable system on a chip ("PSOC"), a programmable/programmed logic device, memory device containing instructions, or the like, or combinational logic embodied in hardware. Logic may also be fully embodied as software stored on a non-transitory, tangible medium which performs a described function when executed by a processor. Logic may suitably one or more modules configured to perform one or more functions.

In an example embodiment, controller 12 receives feedback from either or both of two sources. The first source, a voltage (V) sensor 14, senses the output voltage of I to V converter circuit 11 and provides a signal to controller 12 indicating the magnitude of output voltage of I to V converter circuit 11. In an example embodiment, the output voltage of I to V converter circuit 11 is provided to controller 12 via a resistor network. The second input is a current ("I") sensor 15 that senses the current from load 13. In an example embodiment, controller 12 adjusts the output voltage of I to V converter circuit 11 (which is sensed by V sensor 14) until a desired (for example constant) current is achieved (which is sensed by I sensor 15).

FIG. 2 is a block diagram illustrating an example of a power supply 20 that receives an AC current and provides a DC output and an open circuit indication. In an example embodiment, if controller 12 determines there is an open circuit in load 13 (for example in an airfield LED lighting system one of the LEDs is open), controller 12 can signal open circuit indicator 21 to indicate an open circuit. In an example embodiment, open circuit indicator 21 comprises a LED which provides a visual indicator when an open circuit is detected. In particular embodiments, open circuit indicator 21 further comprises an output that can be used to indicate an open circuit to a second power supply (not shown). This can enable compliance with regulatory requirements that require power be removed from all loads responsive to an open circuit from any load (for example some airfield sign regulations require that if one light of a sign is not working that all lights are to be turned off).

In an example embodiment, controller 12 receives an input from an external (e.g., second) power supply (not shown) that indicates whether an open circuit was detected by the load powered by the second power supply. If an open circuit is detected, controller 12 may signal switch 22 to open, disconnecting the load. In an example embodiment, switch 22 suitably comprises a controllable switching device such as a MOSFET. In particular embodiments, switch 22 may also be configured to open if an open circuit is detected in load 13. As noted in the previous paragraph, this can enable compliance with regulatory requirements that require power removed from all loads in response to detecting an open circuit in any load.

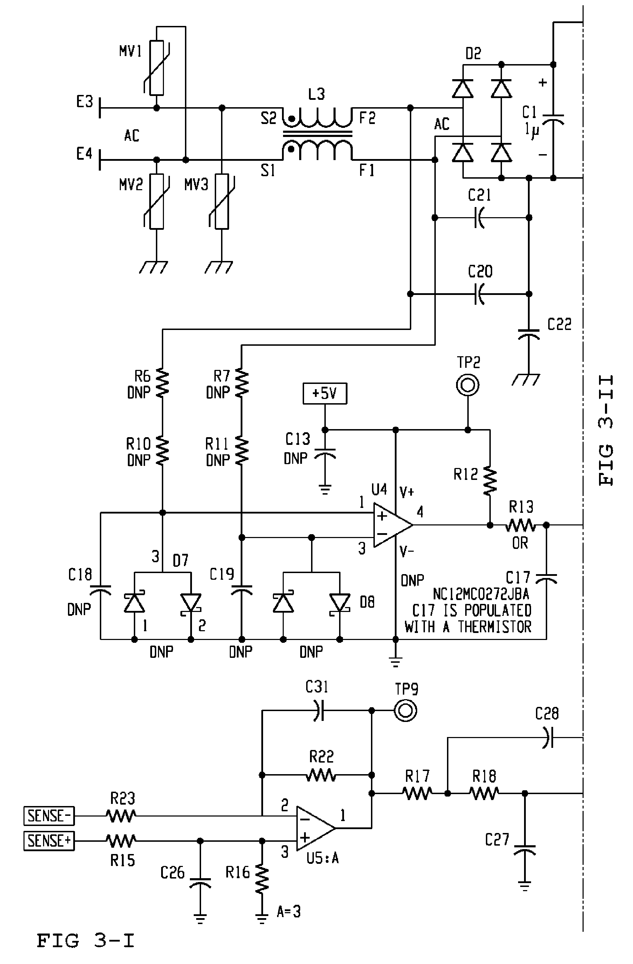

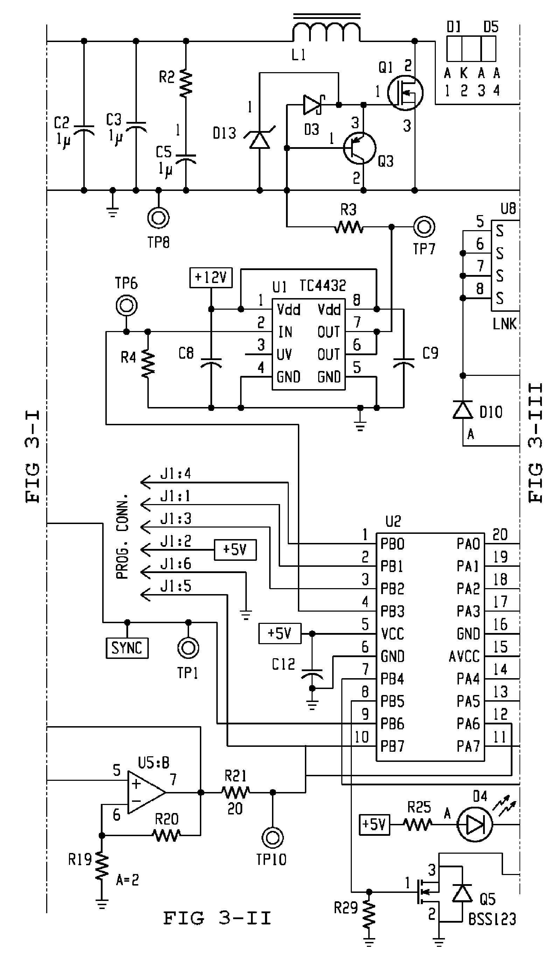

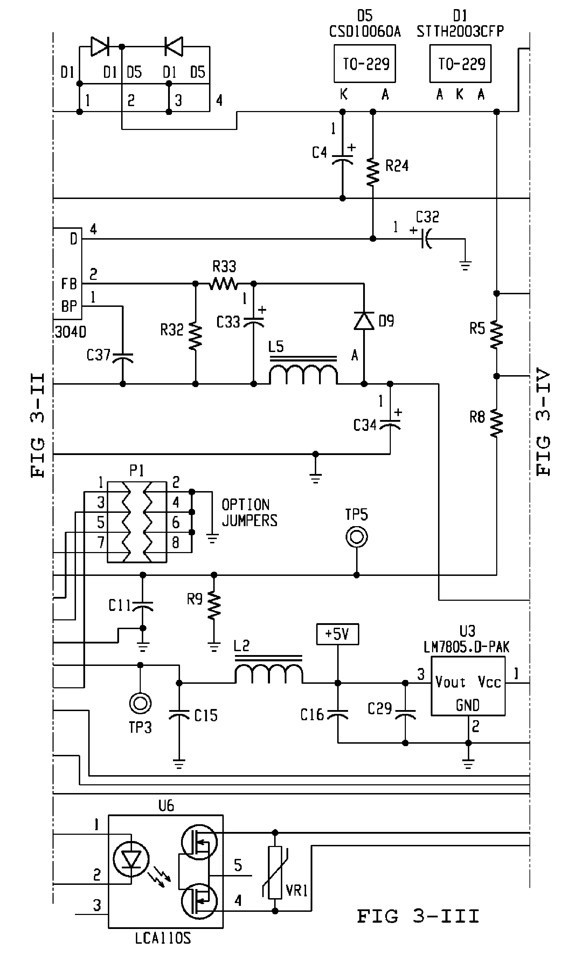

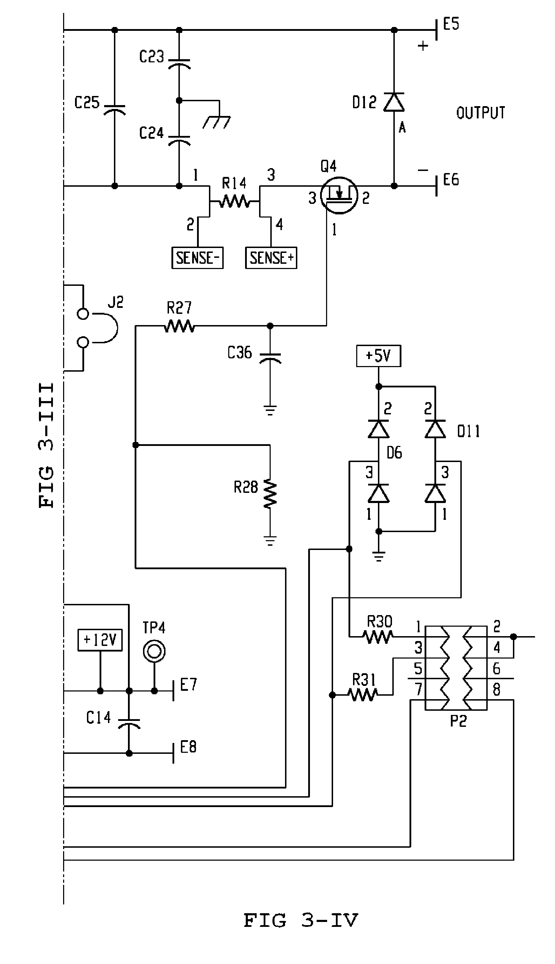

FIG. 3 is a circuit diagram illustrating an example of a power supply that receives an AC current and provides a DC output and provides an open circuit indication. An alternating (AC) current is received at E3, E4 and is provided to bridge circuit D2. The rectified input current is provided to a boost circuit comprising inductor L1, controllable switching device (in the illustrated example a Metal-Oxide Semiconductor Field-Effect Transistor or "MOSFET") Q1 one of diodes D1, D5, and capacitor C4. In operation, when Q1 is closed, all of the current flows into L1 and energy is stored in the L1's magnetic field. When Q1 is open, current is provided to the load (OUTPUT, coupled with E5, E6). Capacitor C4 functions as a filtering capacitor. The load is coupled across C4.

A first feedback loop that senses the output voltage is formed by resistors R5, R8. The current from R5, R8 is input into a first Analog to Digital (A/D) converter of controller U2. In this example, the first analog input of U2 is receiving the voltage across C4.

Controller U2 controls the operation of Q1 to generate a DC voltage. Q3 is employed to speed up the transition of Q1 from the on state to the off state.

The power supply further includes resistor R14 and transistor Q4 coupled between C4 and the load. In an example embodiment, R14 is a very small shunt resistor, which generates a voltage proportional to the current flow through the load. SENSE+ and SENSE- which are at opposite ends of R14 are provided to first differential amplifier, U5:A. The output of U5:A is provided to a second differential amplifier, U5:B. The output of U5:B is provided to a second A/D converter of U2. In the illustrated example, the gain of U5:A is 3 and the gain of U5:B is 2; however, those skilled in the art can readily appreciate that any suitable gain may be employed.

In an example embodiment, U2 adjusts the output voltage (or load voltage) to achieve a constant output current (or load current). U2 can determine the load current by reading the voltage across R14, which is proportional to the load current.

In an example embodiment, the power supply illustrated in FIG. 3 is employed to provide DC power to an airfield sign employ light emitting diodes (LEDs). In particular embodiments, the diodes are in series. Because diode current is constant, the desired load current is constant no matter how many diodes are employed. In an example embodiment, the power supply can provide regulated power from 14 to 44 LEDs. Each LED has an approximately 3.5 volt voltage drop, thus the output voltage may vary from 49V to 154V. U2 does not need to know how many LEDs are in the output circuit, U2 can be configured to provide an initial output voltage, and increase the output voltage until a constant current is achieved, which U2 can determine by reading the voltage drop across R14.

In an example embodiment, if an LED of the load opens, there will be no voltage across R14, and transistor Q4 opens. In response, controller U2 switches LED D4 on. In addition U6 will generate a signal indicating a failure which is provided to terminals 7 and 8 of P2. If multiple power supplies are employed, terminals 7 and 8 of P2 are connected to terminals 1 and 2 of a second power supply, and visa versa. If a signal is received across terminals 1 and 2, U2 will shut down the output voltage. For example if a signal provided to U2 from terminals 1,2 of P2 indicates an open circuit was detected by an external (not shown) power supply, U2 can open (switch off) Q4. This can ensure compliance with regulatory requirements that require a shut down of all lights (LEDs) upon detection of a failure of any light (LED).

In the illustrated example, U1 is employed as a driver for Q1. U1 receives a 0-5 volt signal that is converted to a 0-12 volt signal to switch Q1 on and off. U8 is employed to convert a high voltage to a 12 volts. The output of U8 is provided at TP4 and/or E7. U3 is a linear regulator that converts a 12 volt signal to a 5 volt signal.

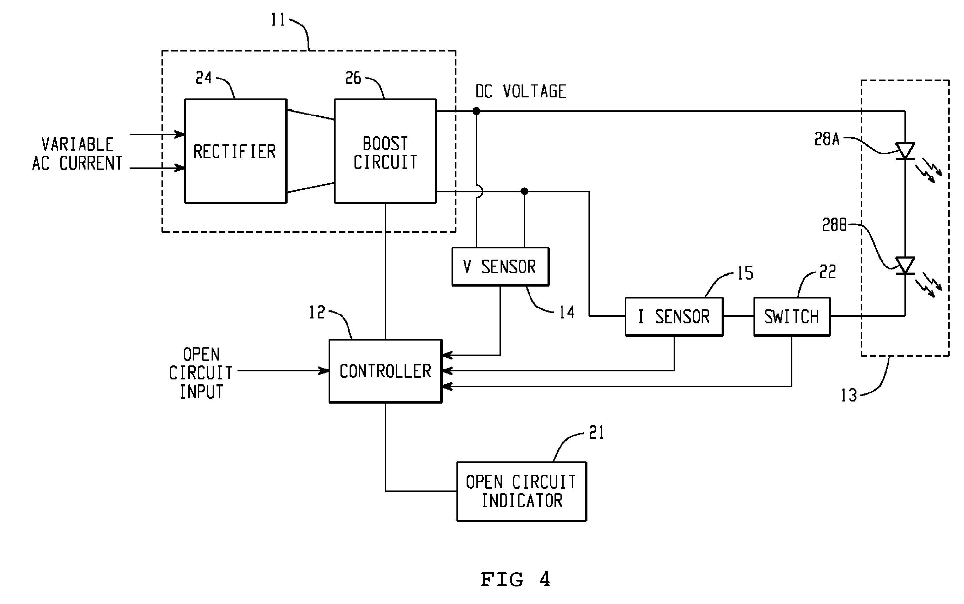

FIG. 4 illustrates an example of a schematic diagram for a lighting system in accordance with an example embodiment. In the illustrated example, an AC current, which may vary in magnitude, is applied to rectifier 24. In particular embodiments, rectifier 24 may be a bridge rectifier. The output of rectifier 24 is provided to boost circuit 26. Controller 12 is operable to control boost circuit 26 to provide a desired (or predefined) current to a load by controlling the voltage of boost circuit 26. Voltage sensor 14 provides feedback, the output voltage of boost circuit 26, to controller 12. Current sensor 15 provides data representative of a magnitude of the current through load 13 (LEDs 28A, 28B) to controller 12. In an example embodiment, controller 12 adjusts the output voltage of boost circuit 26 until a desired current is provided to load 13. Because LEDs 28A, 28B are in series, the same current passes through them, and thus the luminous intensity of LEDs 28A, 28B would also be similar.

In the illustrated example, load 13 comprises a plurality of light emitting diodes (LEDs) 28A, 28B. Although the example illustrates two LEDs 28A, 28B, those skilled in the art should readily appreciate that this is merely for ease of illustration as load 13 may suitably comprise any physically realizable number of LEDs. The output of load 13 (at LED 28B) is provided to switch 22 and current sensor 15.

Switch 22 provides an open circuit indication to controller 12. When no current is passing through LEDs 28A, 28B, switch 22 opens, providing an indication to controller 12 that there is a fault (open circuit) in the load (e.g., one of LEDs 28A, 28B has failed). Controller 12 provides a signal to open circuit indicator 21 to provide an indication of the fault. In an example embodiment, open circuit indicator 21 comprises a light emitting diode (LED) and controller 12 provides current to the illuminate the LED when the fault condition is detected. In an example embodiment, switch 22 comprises a Metal-Oxide Semiconductor Field-Effect Transistor ("MOSFET").

In an example embodiment, controller 12 may receive an input from an external device indicating whether a fault condition exits. In the illustrated example, controller 12 receives an open circuit input from the external device. Upon the assertion of an open circuit signal at the open circuit input, controller 12 provides a signal to switch 22 to open (disconnect the current from LEDs 28A, 28B). Optionally, controller 12 may also assert a signal to open circuit indicator 21.

In an example embodiment, rectifier 24 receives current from an airfield lighting system which employs multiple current levels to indicate a desired intensity for runway and/or taxiway lights. For example, a first current level may indicate a first (low level) luminous intensity, a second level indicating a second (medium level) luminous intensity, and a third level indicating a third (high level) luminous intensity. Processor 12 is operable to control the voltage of boost circuit 26 so that the current provided to LEDs 28A, 28B is the same whether the current received by rectifier 24 is at the first level, second level, or third level.

In an example embodiment, controller 12 controls boost circuit 26 to provide a first output voltage at the output of boost circuit 26. Controller 12 receives data representative of the current provided to LEDs 28A, 28B from current sensor 15. If no current is detected by current sensor 15, controller 12 increases the output voltage of boost circuit 26 until a constant current is achieved through LEDs 28A, 28B. An aspect of this example embodiment is that controller 12 does not have to be programmed or pre-configured with the number of LEDs 28A, 28B in load 13. Controller 12 simply increases the voltage until either the LEDs conduct, or until a maximum output voltage is reached, at which point controller 12 determines a fault condition (e.g., one of LEDs 28A, 28B has failed, the load is too large, etc.) exists, and optionally may open switch 22 and/or signal a fault condition via open circuit indicator 21.

In an example embodiment, the lighting system illustrated in FIG. 4 provides a constant illumination, independent of the input current. This can allow an airfield sign to provide a constant illumination while coupled to an airfield lighting system that provides different current magnitudes to runway and/or taxiway lights to achieve different light intensities.

## Claims

1. An apparatus, comprising:
a rectifier for receiving an alternating current having a magnitude;
a boost circuit coupled to the rectifier for receiving the rectified alternating current;
a processor coupled to the boost circuit, the processor operable to control the operation of the boost circuit;
wherein the processor is operable to control the boost circuit to provide a predefined constant, regulated current to a load by controlling a voltage at the output of the boost circuit; and
wherein the predefined constant, regulated current is independent of the magnitude of the alternating current.

2. Apparatus of claim 1, further comprising a voltage sensor coupled with the boost circuit for providing data representative of a voltage at the boost circuit to the processor.

3. Apparatus of claim 1 or 2, wherein the load comprises a plurality of light emitting diodes.

4. Apparatus of any one preceding claim, further comprising a controllable switching device coupled interstitial to the boost circuit and the load, the controllable switching device operable to provide an open circuit indication to the processor.

5. Apparatus of claim 4, wherein the controllable switching device is a Metal-Oxide Semiconductor Field-Effect Transistor (MOSFET).

6. Apparatus of any one preceding claim, further comprising a current sensor coupled interstitial to the boost circuit and the load, the current sensor providing data representative of a current passing through the load to the processor.

7. Apparatus of any one preceding claim, wherein the alternating current has a current magnitude selected from a group consisting of a first magnitude, a second magnitude, and a third magnitude; and
wherein the processor is configured to adjust the output of the boost circuit to provide the same regulated current to the load whether the magnitude of the alternating current is the first, the second or the third magnitude.

8. Apparatus of any one preceding claim, further comprising a controllable switching device coupled interstitial to the boost circuit and the load;
wherein the processor is configured to receive a signal from an external device with data indicating whether the external device has encountered a fault condition; and wherein the processor signals the controllable switching device to open responsive to receiving a signal indicating the external device has encountered a fault condition.

9. Apparatus of any one preceding claim, further comprising:
a controllable switching device coupled interstitial to the boost circuit and the load,
the controllable switching device providing an open circuit indication at the load to the processor;
a light emitting diode for indicating a fault condition;
wherein the processor is configured to switch on the light emitting diode responsive to the controllable switching device providing an open circuit indication.

10. Apparatus of claim 9, further comprising an output for indicating a fault condition was detected coupled with the processor; and
wherein the processor is configured to assert a predefined signal on the output responsive to the controllable switching device providing an open circuit indication.

11. Apparatus of any one preceding claim, wherein the processor is operable to control the boost circuit to provide an initial output voltage at the output of the boost circuit; and
wherein the processor is configured to increase the output voltage at the output of the boost circuit until a constant current is achieved through the load.

12. An airfield lighting device comprising the apparatus of any one preceding claim and a plurality of light emitting diodes coupled to the boost circuit for acting as said load.

13. The airfield lighting device of claim 12, further comprising:
a voltage sensor coupled to the boost circuit operable to provide data representative of a voltage at the boost circuit to the processor;
a controllable switching device coupled interstitial to the boost circuit and the plurality of light emitting diodes, the controllable switching operable to providing an output circuit indication to the processor; and
a current sensor coupled interstitial to the boost circuit and the plurality of light emitting diodes, the current sensor providing data representative of a current passing through the plurality of light emitting diodes to the processor.
